(19) Europäisches Patentamt
European Patent Office
Office européen des brevets

(11) Publication number: **0 409 524 A1**

# (12) EUROPEAN PATENT APPLICATION

(21) Application number: **90307743.6**

(22) Date of filing: **16.07.90**

(51) Int. Cl.[5]: **C08K 9/08**, C08K 7/14, C08L 81/02, C08G 75/02

(30) Priority: **17.07.89 JP 182676/89**

(43) Date of publication of application: **23.01.91 Bulletin 91/04**

(84) Designated Contracting States: **BE CH DE FR GB IT LI NL**

(71) Applicant: **Tosoh Corporation**
**4560, Oaza Tonda**
**Shinnanyo-shi Yamaguchi-ken(JP)**

Applicant: **Toso Susteel Co., Ltd.**
**7-7, Akasaka 1-chome**
**Minato-Ku Tokyo(JP)**

(72) Inventor: **Sakane, Takehiko**
**4-1, Betsumei 3-chome**
**Yokkaichi-shi Mie-ken(JP)**
Inventor: **Kato, Toshikazu**
**5-1, Betsumei 3-chome**
**Yokkaichi-shi Mie-ken(JP)**
Inventor: **Inoue, Hiroshi**
**5-8, Betsumei 3-chome**
**Yokkaichi-shi Mie-ken(JP)**
Inventor: **Fujioka, Masanori**
**129, Oaza Hazuotsu**
**Yokkaichi-shi Mie-ken(JP)**

(74) Representative: **Kearney, Kevin David Nicholas et al**
**KILBURN & STRODE 30 John Streeteet**
**London, WC1N 2DD(GB)**

## (54) Poly (Phenylene sulfide) resin composition.

(57) A composition comprising a poly(phenylene sulfide) resin having a specified range of rheological characteristics and glass fibers treated with an epoxy-based binder improves the strength, in particular the weld strength, of moldings formed from the composition.

EP 0 409 524 A1

## POLY(PHENYLENE SULFIDE) RESIN COMPOSITION

This invention relates to a poly(phenylene sulfide) resin composition, in particular a poly(phenylene sulfide) resin composition exhibiting an improved weld strength.

Poly(phenylene sulfide) resins have excellent heat and chemical resistance properties and, hence, have attracted a good deal of attention as materials useful for producing parts for electrical and electronic instruments, automotive parts and the like. Poly(phenylene sulfide) materials may be formed or molded, for example by injection or extrusion molding techniques, into various parts, films, sheets, fibers and the like. These molded products have been used in a wide range of applications where high heat and chemical resistance properties are required.

Though poly(phenylene sulfide) resins are known as materials with surpassing heat and chemical resistance properties, they are not capable of providing completely satisfactory strength and heat resistance when used neat. Therefore, poly(phenylene sulfide) materials have been used with fibrous substances (such as glass fibers or carbon fibers) or inorganic fillers (such as calcium carbonate etc.) added thereto to enhance their strength and heat resistance properties. Even if poly(phenylene sulfide) materials are reinforced with such inorganic fillers, however, they suffer from a serious disadvantage that they exhibit a low weld strength. In particular where poly(phenylene sulfide) materials are used in the preparation of precision moldings such as connectors, cracking which may initiate and propagate at a weld point has been a major problem. With the intention of addressing the weld strength problem, it has been proposed to increase the viscosity ofpoly(phenylene sulfide) to an effective degree by curing, see for example Japanese Patent Public Disclosure (KOKAI) No. 62-197422. However, the cured resins do not appear to provide a fully satisfactory level of weld strength.

Japanese Patent Publication (KOKOKU) No. 64-2624 describes a method for preparing a branched and/or crosslinked poly(phenylene sulfide), instead of such a cure product, by using an additional copolymerizable monomer having at least three halogen atoms in the conventional polymerization processes for producing poly(phenylene sulfide). In this method, in order to increase the apparent melt viscosity of the product resin, the proportion of the monomer having three or more halogen atoms used must be increased. However, use of an increased proportion of the polyhalogenated monomer leads to an increased number of sites where the branching and/or crosslinking occur, which will, in turn, present a difficulty that the product exhibits decreased mechanical strength.

Recently, there has been a general tendency in the art for linear poly(phenylene sulfide) materials to be employed in place of the conventional crosslinked type of poly(phenylene sulfide) materials. Though use of the linear polymer materials will improve the weld strength of the moldings prepared therefrom, the linear materials tend to provide moldings having flashes or fins. Thus, the linear polymers present a new problem. Poly(phenylene sulfide) materials that are completely free from all the above-discussed problems have never been proposed.

A primary object of the present invention is to provide a poly(phenylene sulfide) resin composition by incorporating glass fibers treated with an epoxy-based binder into a poly(phenylene sulfide) resin having specific rheological properties, said composition exhibiting an increased weld strength, inhibition of fin formation in the moldings, increased levels of elongation and pin-penetration threshold strength, and enabling a molding operation with a decreased cycle time.

Accordingly, the present invention provides a poly(phenylene sulfide) resin composition comprising:

(i) 100 parts by weight of a poly(phenylene sulfide) resin that has been prepared by reacting at least one dihalo-aromatic compound with an alkali metal sulfide in an organic amide solvent and has been cured to attain such a level of melt viscosity $\eta$ in poise unit as measured at 300 °C and a shear rate of 200 $sec^{-1}$, in combination with a non-Newtonian index n that both the parameters simultaneously satisfy all the following algebraic expressions:

(a) $2.5\,n - 1.0 \leqq \log \eta \leqq 2.5\,n + 0.3$,

(b) $2.9 \leqq \log \eta$,

(c) $1.1 \leqq n \leqq 1.6$; and

(ii) 10 - 200 parts by weight of glass fibers treated with an epoxy-based binder.

The poly(phenylene sulfide) resins which are used in accordance with the present invention may be prepared by the known method in which a dihalo-aromatic compound is reacted with an alkali metal sulfide in an organic amide solvent as disclosed, for example, in Japanese Patent Publication (KOKOKU) No. 45-3368.

The organic amides, dihalo-aromatic compounds and alkali metal sulfides which may be used will be exemplified below.

Examples of the organic amides which may be mentioned include N,N-dimethyl acetamide, N,N-dimethyl formamide, hexamethylphosphoramide, N-methyl-ε-caprolactam, N-ethyl-2-pyrrolidone, N-methyl-2-pyrrolidone, tetramethyl urea, 1,3-dimethyl imidazolidinone and the like and mixtures thereof.

The dihalo-aromatic compounds means aromatic compounds having two halogen atoms in the molecule. Typical examples of the dihalo-aromatic compounds include p-dichlorobenzene, p-dibromobenzene, p-di-iodobenzene and mixtures thereof, with p-dichlorobenzene preferred. Other dihalo-aromatic compound, for example, m-dihalobenzenes (e.g. m-dichlorobenzene), o-dihalobenzenes (e.g. o-dichlorobenzene), dichloro- and dibromo-naphthalene, dichlorodiphenyl sulfone, dichlorobenzophenone, dichlorodiphenyl ether, dichlorodiphenyl sulfide, dichlorodiphenyl, dibromodiphenyl and dichlorodiphenyl sulfoxide may be copolymerized in a proportion of up to 10 mole % of the p-dihalobenzene. However, preferably the presence of aromatic compounds containing three or more halogen atoms in the molecule should be avoided, since they undesirably promote branching and/or crosslinking of the polymer being produced.

Examples of the alkali metal sulfides which may be used include sulfides of lithium, sodium, potassium, rubidium and cesium and mixtures thereof. The alkali metal sulfide may be employed in the hydrated form. The alkali metal sulfide may be prepared by reacting an alkali metal hydrosulfide with an alkali metal base or reacting hydrogen sulfide with an alkali metal base. The alkali metal sulfide may be formed in situ prior to the introduction of the dihalo-aromatic compound into the polymerization reaction system. Of course, the metal sulfide may be prepared outside the reaction system and then introduced thereinto. Of the above-listed alkali metal sulfides, sodium sulfide is preferably used in the invention.

The poly(phenylene sulfide) used in the present invention should contain 90 mole % or more of structural unit represented by:

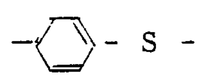

The polymer may contain less than 10 mole % of other copolymerized unit or units, for example, m-phenylene sulfide unit:

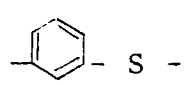

o-phenylene sulfide unit:

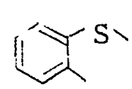

phenylene sulfide sulfone unit:

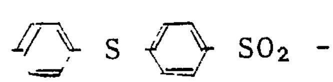

phenylene sulfide ketone unit:

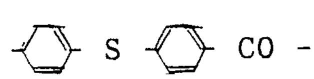

phenylene sulfide ether unit:

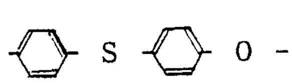

diphenylene sulfide unit:

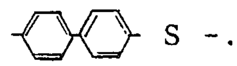

In order to advantageously effect the present invention, the poly(phenylene sulfide) resin used should have a specified range of rheological properties, which depend upon its molecular weight and degree of crosslinking. It is found that there is a correlation between the molecular weight and the melt viscosity ($\eta$) and that the non-Newtonian index (n) is representative of the degree of crosslinking.

Herein, the "melt viscosity" means one that is determined at a temperature of 300° C and a shear rate of 200 $sec^{-1}$. The non-Newtonian index is defined by the formula:

$\dot{\gamma} = \frac{1}{\eta} \tau^n$

where $\dot{\gamma}$ represents the shear rate ($sec^{-1}$), $\eta$ represents the melt viscosity (poise), $\tau$ represents the shear stress ($kg/cm^2$) and n represents the non-Newtonian index.

The rheology properties of the poly(phenylene sulfide) resins that are used in accordance with the present invention are defined below using two parameters, i.e. the melt viscosity determined at 300° C; $\eta$ poises and the non-Newtonian index; n.

(a) $2.5\ n - 1.0 \leqq \log \eta \leqq 2.5\ n + 0.3$,

(b) $2.9 \leqq \log \eta$,

(c) $1.1 \leqq n \leqq 1.6$.

If the melt viscosity is too low, the moldings will show poor strength properties. Where the melt viscosity is excessively high, the polymer has poor rheological characteristics and presents difficulties in molding. If the non-Newtonian index is lower than the above-defined range, mold flashing tends to occur, while the higher indices results in poor rheological characteristics.

The poly(phenylene sulfide) resins having the above-specified range of rheological properties according to the invention may be prepared by subjecting a raw resin to conventional oxidation-crosslinking or curing treatment. That is, a powdery poly(phenylene sulfide) (PPS) may be thermally treated at a temperature below the melting point under an oxygen-containing atmosphere. By appropriately controlling the temperature, the period of time and/or the oxygen concentration used in the treatment, a product poly(phenylene sulfide) having desired rheological properties is obtained. The crosslinking or curing treatment will be described in more detail. The curing temperature is below the melting point of PPS under treatment, and preferably ranges from about 150° C up to 270° C. The curing time is largely influenced by the composition of the oxygen-containing atmosphere and the temperature and usually ranges from about 5 minutes to about 50 hours, and preferably from 30 minutes to 15 hours. The atmosphere under which the curing or crosslinking is effected should comprise an oxygen-containing gas, for example, air or a mixture of oxygen with an inert gas, typically nitrogen.

The expression "glass fibers treated with an epoxy-based binder" used herein means that the glass fibers have been finished with an epoxy resin useful as a binder. The epoxy resin is an aliphatic or aromatic compound having two or more epoxy groups that may be linked directly or indirectly via an ester, ether, amino group or the like to the molecule. Examples of the epoxy resins which may be used include glycidyl epoxy resins which may be prepared by condensation of a glycidyl compound such as glycidyl alcohol or epichlorohydrin with a polyhydric alcohol (including a polyhydric phenol), polycarboxylic acid or amine; and non-glycidyl epoxy resins which may be prepared by oxidation of an olefin. Some examples of the polyhydric alcohols including polyhydric phenols which may be mentioned are ethylene glycol, propylene glycol, butane diols, pentane diols, polyethylene glycol, polypropylene glycol, bis-phenol A, resorcinol, hydroquinone, pyrocatechol, bis-phenol S, trihydroxy-diphenyl dimethyl methane, 1,3,5-trihydroxy benzene, 4,4′-dihydroxybiphenyl, 1,5-dihydroxynaphthalene and the like. Typical examples of the polycarboxylic acids which may be mentioned are phthalic, terephthalic, isophthalic, succinic and adipic acids and the like. Examples of the amines which may be mentioned are benzylamine, m-xylenediamine, 1,3-bis-(aminomethyl)cyclohexane and the like. Examples of the non-glycidyl epoxy resins which may be mentioned are epoxidized polyolefins, vinyl cyclohexene dioxide and the like.

The epoxy resins will become effective as binders when cured by means of a curing agent or catalyst, such as an amine, acid anhydride, imidazole, polythiol, Lewis acid salt or the like.

The amount of the epoxy-based binder used for the glass fibers in the invention ranges from about 0.1 to 1.5 parts, preferably from 0.3 to 0.7 parts, by weight per 100 parts by weight of the glass fibers. Use of the binder in an amount of less than 0.1 parts by weight results in poor bundling of the fibers and an

ununiform dispersion of the fibers in the resin matrix resulting in the final moldings having inferior mechanical properties. On the other hand, where the binder is employed in an amount exceeding 1.5 parts by weight, a significant amount of gases are evolved due to decomposition of the binder during the molding stage and which results in the formation of voids that have an adverse effect on the mechanical strength of the resulting product. Although the invention should employ glass fibers treated with an epoxy-based binder, the binder may be used in combination with another resin-based binder or binders, provided that the particular advantages of the invention are not significantly affected by the use of the other binder(s).

The length of the glass fibers used in the invention is, before kneading with the molten resin, in the range of about 1 - 12 mm, preferably 3 - 6 mm and the diameter is in the range of about 5 - 30 µm, preferably 6 - 15 µm. The glass fibers having a length of less than 1 mm and/or a diameter of greater than 20 µm will provide the resin with insufficient reinforcement. Glass fibers having a length exceeding 12 mm and/or a diameter less than 5 µm may cause the moldability of the resulting composition to change unpredictably.

The proportion of the glass fibers added to the poly(phenylene sulfide) resin is within the range of about 10 - 200 parts, preferably 20 - 100 parts, by weight per 100 parts by weight of the poly(phenylene sulfide) resin. Addition of glass fibers as less than 10 parts by weight will result the product moldings having an unacceptably low strength and raises the production cost due to the increased proportion of the relatively expensive resin. On the other hand, addition of glass fibers as greater than 200 parts by weight may result in poor mechanical properties, moldability and rheological characteristics.

In the invention, the glass fibers treated with the epoxy-based binder may be incorporated into the poly-(phenylene sulfide) having the specified rheological properties by a conventional melt-kneading technique. For example, the poly(phenylene sulfide) resin and the glass fibers are dry blended and the blend is melt-kneaded and pelletized. Alternatively, the poly(phenylene sulfide) resin and the glass fibers may be separately fed into an extruder through discrete inlets and melt-kneaded therein and thereafter pelletized. These methods may be suitably combined. In addition to the glass fibers, other fillers or additives or other resins may be incorporated, provided that they do not adversely affect the effects of the invention. The fillers other than the glass fibers which may be used include, for example, inorganic filler, organic and inorganic pigments and non-vitreous fibrous fillers. Particular examples of the inorganic fillers and organic and inorganic pigments which may be mentioned are calcium carbonate, mica, talc, silica, barium sulfate, calcium sulfate, kaolin, clay, pyroferrite, bentonite, sericite, zeolite, nepheline syenite, attapulgite, wollastonite, ferrites, calcium silicate, magnesium carbonate, dolomite, antimony trioxide, zinc oxide, titanium oxide, magnesium oxide, iron oxides, molybdenum disulfide, graphite, gypsum, glass beads, powdered glass, glass balloons, quartz, quartz glass, and mixtures thereof.

The non-vitreous fibrous fillers which may be mentioned are, for example, ceramic fibers (e.g., carbon, alumina and the like fibers), aramide fibers, wholly aromatic polyester fibers, metallic fibers, potassium titanate whisker and the like.

Further, conventional additives, for example, plasticizers (e.g. aromatic dihydroxy derivatives), mold release agents, silane or titanate coupling agents, lubricants, heat stabilizers, weathering agents, nucleating agents, blowing agents, rust-proofing agents, ion-trapping agents, flame-retardants and flame-proofing aids may also be incorporated, if desired.

Particular examples of the polymers which may be blended in the composition include homopolymers such as polyethylene, polypropylene, polybutadiene, polyisoprene, polychloroprene, polystyrene, polybutene, poly α-methylstyrene, polyvinyl acetate, polyvinyl chloride, polyacrylate, polymethacrylate, polyacrylonitrile, polyamides (e.g., nylon 6; nylon 6,6; nylon 6,10; nylon 12; nylon 11, nylon 4,6, etc.), polyesters (e.g., polyethylene terephthalate, polybutylene terephthalate, polyarylates, etc.), polyurethanes, polyacetals, polycarbonates, polyphenylene oxides, polyphenylene sulfide sulfones, polyphenylene sulfide ketones, polysulfones, polyether sulfones, polyaryl sulfones, polyether ketones, polyether ether ketones, polyimides, polyamide imides, silicone resins, phenoxy resins, fluorine resins and the like; random, block or graft-copolymers thereof; and mixtures thereof.

## Example

The invention will be described in more detail with reference to the non-limiting Examples.

In the Examples, the melt viscosities $\eta$ of the poly(phenylene sulfide) resins were measured in a KOHKA type flow tester at a temperature of 300 °C and a shear rate of 200 $sec^{-1}$ using a die of 0.5 mm internal diameter and 2.0 mm length under a load of 10 kg.

The non-Newtonian indices n of the resins were determined by measuring shear stress at various shear

rates ranging from 10 to 1000 $sec^{-1}$ and at a temperature of 300 °C in a capillary rheometer provided with a die of 1 mm internal diameter D, 60 mm length L and L/D ratio of 60; logarithmically plotting the shear stress against the shear rate to produce a curve; and calculating the value of a non-Newtonian index n from the slope of the curve.

Reference Example

A poly(phenylene sulfide) resin containing copolymerized 1,2,4-trichlorobenzene and which fell outside the scope of the present invention was prepared as follows.

Into a stirred 15-liter-capacity autoclave, N-methyl-2-pyrrolidone (referred to as NMP hereinafter) 5000 g and sodium sulfide 1898 g (14.8 moles) were charged and heated up to 205 °C to distill off 380 g of water accompanied with 10 g of NMP. Thereafter, p-dichlorobenzene 2130 g (14.5 moles) was added to the mixture, which was heated at 230 °C for a further 2 hours. Subsequently, a solution of 1,2,4-trichlorobenzene 7.9 g (0.044 moles) in NMP 200 g was added to the mixture by pressure pump means. The reaction mixture was heated at 250 °C for a further 3 hours. On completion of the polymerization, the reaction mixture was cooled to ambient temperature. The polymer was centrifugally isolated, repeatedly washed with warm water and dried at 100 °C for 24 hours. The resulting poly(phenylene sulfide) resin had a melt viscosity of 2600 poises and a non-Newtonian index of 1.42.

Example 1

A poly(phenylene sulfide) resin having a melt viscosity of 3300 poises and a non-Newtonian index of 1.35 within the specified range of rheological properties (100 parts by weight) was blended with glass fibers (67 parts by weight) including an epoxy-based binder (0.27 parts by weight). The blend was kneaded in an extruder and extruded to give pellets. The pellets were molded through an injection machine to which was attached a two-point-gated mold for preparing a test specimen to be used in the weld strength test in accordance with ASTM D 638. The results of the weld strength test are shown in Table 1.

Example 2

The procedure as described in Example 1 was repeated except that a poly(phenylene sulfide) resin having a melt viscosity of 5000 poises and a non-Newtonian index of 1.45 (100 parts by weight) was used in place of that of the preceding Example. The results are shown in Table 1.

Comparative Example 1

The procedure of Example 1 was repeated except that 67 parts by weight of glass fibers containing 0.27 parts by weight of a urethane-based binder were used per 100 parts by weight of the poly(phenylene sulfide) resin having the rheological properties as described in Example 1. The results are shown in Table 1.

Example 3

The procedure of Example 1 was repeated except that 100 parts by weight of the glass fibers containing 0.4 parts by weight of the epoxy-based binder were used per 100 parts by weight of the poly-(phenylene sulfide) resin having the rheological properties as described in Example 1. The results are shown in Table 1.

Comparative Example 2

The procedure of Example 1 was repeated except that 100 parts by weight of a poly(phenylene sulfide) resin having a melt viscosity of 3000 poises and a non-Newtonian index of 1.70 outside the specified

rheological property ranges was employed. The results are shown in Table 1.

Comparative Example 3

The procedure of Example 1 was repeated except that 100 parts by weight of a poly(phenylene sulfide) resin containing 0.3 mole % of copolymerized 1,2,4-trichlorobenzene and having a melt viscosity of 2600 poises and a non-Newtonian index of 1.42 and which was outside the scope of the invention was used. The results are shown in Table 1.

Table 1

| | Melt Viscosity $\eta$ (poises) | Non-Newtonian Index n | Poly(phenylene sulfide) resin (parts by weight) | Glass Fibers (parts by weight) | Binders | Weld Tensile strength ($kg/cm^2$) |
|---|---|---|---|---|---|---|
| Example 1 | 3300 | 1.35 | 100 | 67 | epoxy resin | 730 |
| 2 | 5000 | 1.45 | 100 | 67 | epoxy resin | 710 |
| Comp. Example 1 | 3300 | 1.35 | 100 | 67 | urethane resin | 580 |
| Example 3 | 3300 | 1.35 | 100 | 100 | epoxy resin | 690 |
| Comp. Example 2 | 3000 | 1.70 | 100 | 67 | epoxy resin | 450 |
| 3 | 2600 | 1.42 | 100 | 67 | epoxy resin | 550 |

The respective binders were used in a proportion of 0.27 parts by weight per 67 parts by weight of the glass fibers.

From the foregoing, it can be clearly seen that by incorporating glass fibers treated with an epoxy-based binder into a poly(phenylene sulfide) resin having the specified rheological characteristics in accordance with the present invention, the strength, in particular the weld strength, of the moldings is significantly improved to an extent that has never been achieved by the conventional poly(phenylene sulfide) compositions. Furthermore, the present composition exhibits an increased elongation, an improved pin-penetration threshold strength and a decreased mold flashing tendency and also permits the molding operation to be effected with a short cycle time. These advantageous characteristics will be useful in a wide range of applications such as the production of electrical and electronic parts, automative parts and other industrial products.

The term weld tensile strength and weld strength are used interchangably and relate to the same test. The samples for this test are made by molding the sample in a cavity mold, the polymer being introduced in two streams, one from each end, the streams meeting in the middle and forming a weld line where they meet. This weld line is the weakest cross section in the sample and when the sample is pulled from either end in the tensile test the sample ruptures at the weld line. This is the reason why the observed property is called the weld tensile strength.

The glass fibers used in all the examples had an average length of 3 mm and an average diameter of 13 microns.

## Claims

1. A poly(phenylene sulfide) resin composition comprising:

100 parts by weight of a poly(phenylene sulfide) resin which has been prepared by reacting at least one dihalo-aromatic compound with an alkali metal sulfide in an organic amide solvent and has been cured to attain such a melt viscosity $\eta$ poises as measured at 300°C and at a shear rate of 200 $sec^{-1}$ and a non-Newtonian index n that both said parameters simultaneously satisfy all the following algebraic expressions:

(a) $2.5\,n - 1.0 \leqq \log \eta \leqq 2.5\,n + 0.3$,

(b) $2.9 \leqq \log \eta$,

(c) $1.1 \leqq n \leqq 1.6$; and

10 - 200 parts by weight of glass fibers treated with an epoxy-based binder.

2. A composition according to Claim 1 wherein the poly(phenylene sulfide) resin contains 90 mole % or more of structural unit represented by

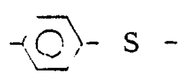

in the macromolecular chain.

3. A composition according to Claim 1 wherein the curing is effected at a temperature below the melting point of the poly(phenylene sulfide) resin for a period of from 5 minutes to 50 hours under an oxygen-containing atmosphere.

4. A composition according to Claim 1 wherein the epoxy-based binder is employed in a proportion of about 0.1 - 1.5 parts by weight per 100 parts by weight of the glass fibers present.

5. A composition according to Claim 1 wherein the glass fibers have a mean length of about 1 - 12 mm, prior to kneading with the poly(phenylene sulfide) resin, and a mean diameter of about 5 - 20 µm.

6. A composition according to Claim 1 which is in the pelletized form to be used in the subsequent molding process.

7. Articles molded from the composition as claimed in any one of the preceding Claims.

European Patent Office

# EUROPEAN SEARCH REPORT

Application Number

**EP 90 30 7743**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL ABSTRACTS, vol. 102, no. 26, 01 July 1985 Columbus, Ohio, USA ref. no. 221686E * abstract & JP-A-60 008 359 (DAINIPPON INK AND CHEMICALS, INC.) 17-01-1985 * | 1 | C 08 K 9/08<br>C 08 K 7/14<br>C 08 L 81/02<br>C 08 G 75/02 |
| A | EP-A-0 275 991 (DAINIPPON INK AND CHEMICALS, INC.) | | |
| A | EP-A-0 301 747 (POLYPLASTICS CO., LTD.) | | |

| TECHNICAL FIELDS SEARCHED (Int. Cl.5) |
|---|
| C 08 K<br>C 08 L<br>C 08 G |

The present search report has been drawn up for all claims

| Place of search | Date of completion of search | Examiner |
|---|---|---|
| The Hague | 29 October 90 | DE LOS ARCOS Y VELAZ |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document